Europäisches Patentamt

European Patent Office

Office européen des brevets

(11) Numéro de publication : **0 316 248 B1**

# FASCICULE DE BREVET EUROPEEN

(45) Date de publication du fascicule du brevet :
**15.01.92 Bulletin 92/03**

(51) Int. Cl.⁵ : **A47J 43/14**

(21) Numéro de dépôt : **88460028.9**

(22) Date de dépôt : **08.11.88**

(54) Dispositif pour casser des oeufs de manière industrielle.

(30) Priorité : **09.11.87 FR 8715656**

(43) Date de publication de la demande :
**17.05.89 Bulletin 89/20**

(45) Mention de la délivrance du brevet :
**15.01.92 Bulletin 92/03**

(84) Etats contractants désignés :
**AT BE CH DE ES GB GR IT LI LU NL SE**

(56) Documents cités :
**DE-A- 2 702 157**
**FR-A- 2 420 308**
**US-A- 2 089 214**
**US-A- 3 055 407**
**US-A- 3 613 756**

(73) Titulaire : **Lozach, Jean Baptiste**
**16, rue de l'Alouette Pabu**
**F-22200 Guingamp (FR)**

(72) Inventeur : **Lozach, Jean Baptiste**
**16, rue de l'Alouette Pabu**
**F-22200 Guingamp (FR)**

(74) Mandataire : **Martin, Jean-Jacques et al**
**Cabinet REGIMBEAU 11, rue Franz Heller**
**F-35700 Rennes (FR)**

## Description

La présente invention concerne un dispositif pour casser des oeufs de manière industrielle, ce dispositif étant destiné notamment à être utilisé dans le domaine agro-alimentaire, par exemple dans les biscuiteries.

L'invention concerne plus précisément un perfectionnement au dispositif décrit dans le brevet antérieur national français FR-A-2602401 du demandeur et on considèrera que les enseignements de ce brevet antérieur font partie de la présente description. Ledit brevet antérieur a été publié le 12.02.1988 et ne met pas en évidence l'état public de la technique au sens de la Convention.

Dans une de ses formes de réalisation, le dispositif objet de cette demande antérieure comprend une paire de plaques perforées — appelées tables — qui sont articulées à la fois l'une sur l'autre (à la manière de deux valves d'une coquille) et en bloc, autour d'un axe horizontal fixe.

Ces deux plaques peuvent être refermées l'une contre l'autre pour recevoir et retenir entre elles un plateau alvéolé garni d'oeufs. De tels plateaux, généralement en matière cellulosique moulée, sont bien connus car ils constituent l'emballage d'origine dans lequel les oeufs sont fournis par leurs producteurs ; chaque plateau contient généralement trente oeufs qui sont répartis suivant six rangées de cinq unités.

Des moyens de verrouillage sont prévus qui permettent de maintenir les deux plaques à l'état fermé, ces plaques constituant un boîtier dans lequel est emprisonné le plateau alvéolé contenant les oeufs ; ces oeufs sont bien maintenus en place, les ouvertures prévues dans l'une des plaques autorisant le passage des fonds d'alvéoles du plateau, tandis que les ouvertures prévues dans l'autre plaque autorisent le passage de l'extrémité des oeufs opposée à celle se trouvant dans les alvéoles.

Il est possible de faire pivoter le boîtier sur un angle de 180° autour de l'axe susmentionné, afin de transférer le plateau garni, en le retournant, d'un poste de chargement et de déchargement à un poste de cassage, et inversement.

Au poste de cassage, le plateau alvéolé se trouve disposé horizontalement à l'envers (c'est-à-dire avec ses alvéoles ouvertes vers le bas), au-dessus d'une série de broches dont le nombre et la position correspondent à ceux des oeufs ; ces broches sont solidaires d'un coulisseau mobile verticalement, entraîné par des vérins pneumatiques. Les broches sont agencées pour casser les oeufs, par transpercement de bas en haut, à travers les ouvertures de la plaque inférieure.

Après cassage, les broches sont retirées des oeufs par mouvements de haut en bas, et le contenu liquide des oeufs s'écoule vers le bas, sur des plaques collectrices ; l'oeuf liquide est ensuite acheminé par gravité jusqu'à un bac récepteur, après passage à travers des grilles de tamisage destinées à retenir les éclats de coquilles éventuellement produits durant le cassage.

Ensuite, un opérateur fait basculer le boîtier de 180° pour le ramener, en le retournant, au poste de chargement/déchargement, et ouvre ce boîtier pour dégager le plateau alvéolé contenant les coquilles vides des oeufs cassés ; il met en place un nouveau plateau, et l'opération est réitérée.

Ce dispositif donne généralement satisfaction, grâce à sa simplicité, son faible prix de revient, son efficacité, et le caractère particulièrement hygiénique de l'opération de cassage. De plus, il est particulièrement commode à utiliser, du fait que les oeufs sont maniés non pas un à un, mais par plateaux entiers, sans qu'on ait à les retirer de leur emballage d'origine.

Ce dispositif présente cependant des inconvénients qui sont liés à la viscosité naturelle de l'oeuf cru, cette viscosité rendant le temps d'écoulement relativement long ; après chaque cassage, l'opérateur est obligé d'attendre pendant plusieurs secondes que les oeufs se soient complètement vidés pour procéder aux opérations de déchargement et de chargement en vue du cassage de la série suivante. Bien que la présence sur les broches d'un ovule biconique — comme cela a été prévu dans la demande antérieure — permette d'accélérer sensiblement la phase d'écoulement, ce problème subsiste néanmoins et le dispositif est encore perfectible de ce point de vue.

D'autre part, le temps que met la substance produite par le cassage d'une série d'oeufs à traverser, par simple gravité les grilles de tamisage, est également relativement long, nettement supérieur au temps nécessaire au cassage et au vidage de ces oeufs.

L'invention se propose de résoudre ces différents problèmes.

C'est pourquoi, un premier objectif de l'invention est d'améliorer le rendement du dispositif en réduisant très sensiblement les temps morts.

Ce résultat est atteint, conformément à l'invention, par le fait que, dans un dispositif du type général décrit plus haut, il est prévu deux postes de cassage et qu'à chacun de ceux-ci est associée une paire de plaques perforées (c'est-à-dire un boîtier pouvant recevoir un plateau alvéolé garni d'oeufs), chacune de ces paires de plaques pouvant être amenée par pivotement au poste de chargement/déchargement lorsque l'autre paire de plaques se trouve au poste de cassage, et vice versa.

Ainsi, comme on peut le comprendre aisément, le temps nécessaire à l'écoulement de l'oeuf liquide produit par une série d'oeufs contenus dans l'un des boîtiers, est mis à profit par l'opérateur pour effectuer les opérations de déchargement et de chargement des oeufs dans l'autre boîtier, ce qui supprime le temps mort évoqué plus haut.

Dans un mode de réalisation préférentiel, les deux séries de broches équipant les deux postes de cassage, sont portées par des plaques ajourées (laissant passer l'oeuf liquide), ces plaques étant fixées à un coulisseau commun ; celui-ci est entraîné par exemple par des vérins pneumatiques.

Grâce à cet arrangement, la structure de la machine est extrêmement simple et ses moyens de commande sont réduits ; en outre, comme on l'expliquera plus loin, chaque série d'oeufs est ainsi transpercée deux fois, ce qui améliore encore la rapidité et la qualité du vidage des oeufs.

De préférence, les deux axes d'articulation des deux boîtiers sont des axes parallèles situés dans un plan horizontal commun, de part et d'autre du poste de chargement/déchargement. Une telle disposition rend le travail de l'opérateur qui est placé en face de ce poste particulièrement commode, du fait qu'il peut travailler de manière symétrique pour ouvrir et fermer les boîtiers et les faire basculer alternativement sur sa gauche ou sur sa droite.

Un second objectif de l'invention est de faciliter l'écoulement des oeufs liquides au moment de leur tamisage.

A cet effet, il est avantageusement prévu à chacun des postes de cassage, sous la série de broches, une plaque d'écoulement des oeufs liquides, et ces deux plaques convergent vers une grille de tamisage commune, un piston étant adapté pour presser la substance à travers cette grille.

Il peut être prévu soit une grille fixe et un piston mobile, soit un piston mobile et une grille fixe, la partie mobile étant avantageusement solidaire du coulisseau. Ainsi le pressage de l'oeuf liquide à travers la grille s'effectue en même temps que le cassage d'une nouvelle série d'oeufs, sans que l'on doive avoir recours à des moyens de commande additionnels.

D'autres caractéristiques et avantages de l'invention apparaîtront de la description et des dessins annexés qui en présentent des modes de réalisation préférentiels. Sur les dessins :
— la figure 1 est une vue générale schématique, de face, du dispositif ;
— les figures 2 et 3 sont des vues partielles, à échelle légèrement agrandie, du dispositif de la figure 1, représentant différentes étapes d'une opération mise en oeuvre à l'aide de ce dispositif;
— la figure 4 est une vue de face d'une broche équipant le dispositif des figures 1 à 3 ;
— la figure 4A est une vue de côté partielle de cette broche ;
— la figure 5 représente les deux plaques articulées constitutives de l'un des deux boîtiers équipant le dispositif ;
— la figure 6 est une vue de dessus de l'une des deux plaques ajourées sur lesquelles sont montées les broches ;
— la figure 7 représente le perçage d'un oeuf dans le dispositif selon l'invention ;
— la figure 8 est une vue de face schématique d'une variante d'exécution du dispositif représenté à la figure 1.

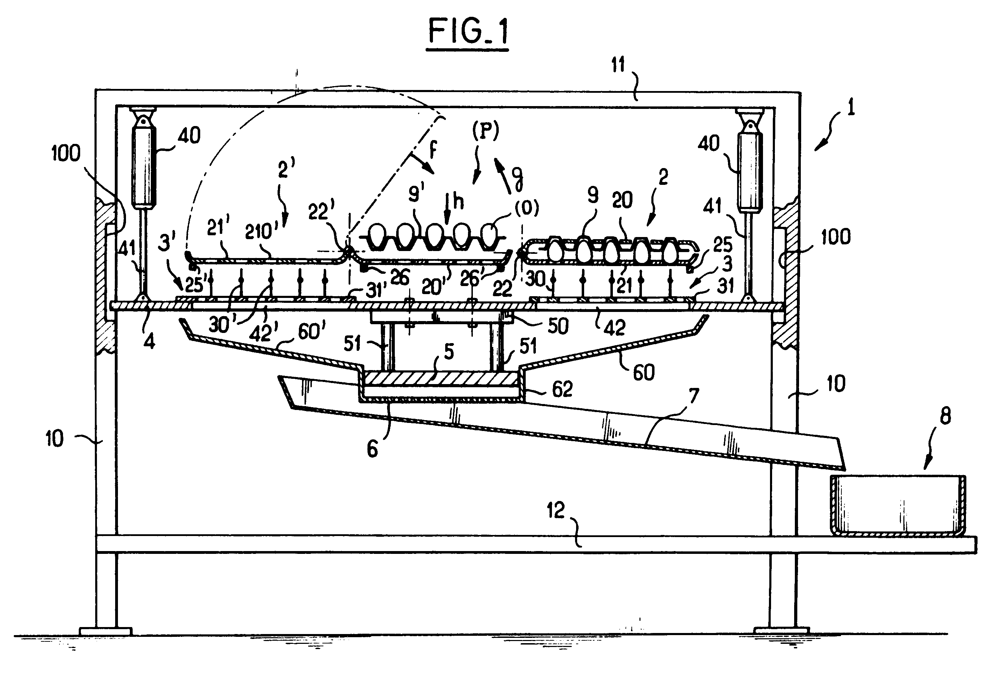

Le dispositif représenté à la figure 1 comporte un bâti 1 ayant la forme générale d'une cage parallélépipédique, qui comprend des montants latéraux 10, une armature inférieure 12 et une armature supérieure 11.

Le dispositif est équipé d'un coulisseau 4 qui est mobile verticalement, et est guidé par des moyens appropriés tels que des rainures 100 ménagées dans les montants verticaux 10 du bâti ; une paire de vérins 40 alimentés en air comprimé par des moyens de commande et de pilotage appropriés, accessibles par un opérateur, permettent de faire monter et descendre le coulisseau 4, ce dernier étant fixé aux tiges 41 de ces vérins ; les moyens de commande et de pilotage sont des moyens dont la conception et la réalisation sont à la portée de l'homme de l'Art, ces moyens n'ayant pas été représentés dans un but de simplification.

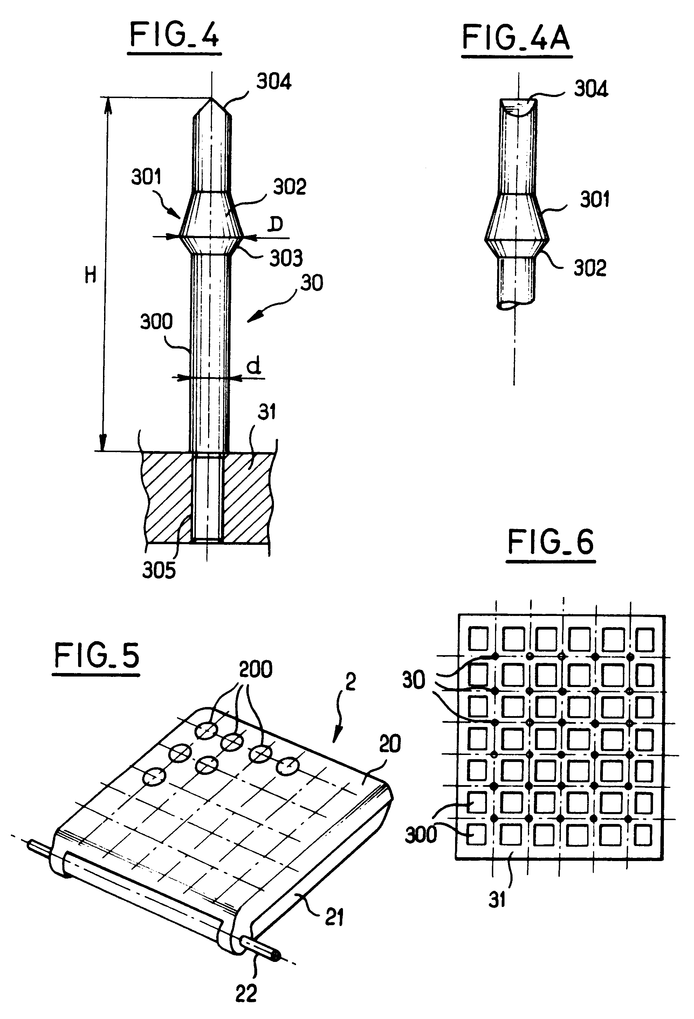

Le coulisseau 4 porte une paire de plaques ajourées 31, 31', qui sont disposées symétriquement de part de l'axe central vertical fictif du dispositif. Comme on le voit à la figure 6, ces plaques ont la forme générale d'une grille présentant des ouvertures 300.

La fixation des plaques 31, 31' sur le coulisseau 4 est réalisée par tout moyen approprié, par exemple à l'aide de vis ; au-dessous de ces plaques ajourées, sont prévues des ouvertures 42, 42' ménagées dans le coulisseau, de manière à autoriser l'écoulement des oeufs liquides, comme on le verra par la suite.

Chaque plaque 31, 31' porte une série de broches 30 dirigées vers le haut. Le nombre et l'emplacement de ces broches correspondent à ceux des plateaux alvéolés d'emballage d'oeufs usuellement utilisés dans le commerce pour la livraison des oeufs en gros ; en l'occurrence, dans la forme de réalisation représentée, il est prévu trente broches réparties selon six rangées de cinq unités.

Les figures 4 et 4A représentent une forme de réalisation particulièrement efficace d'une broche ; celle-ci comprenant une tige cylindrique 300 présentant une extrémité biseautée 304 et un élargissement ou ovule 301 ; ce dernier est formé de deux troncs de cône opposés 302, 303, l'angle au sommet du cône 302 tourné vers le haut étant sensiblement plus faible que celui du cône 303 tourné vers le bas ; le montage de chacune des broches 30 dans la plaque 31 est fait par exemple par vissage, chaque broche présentant à cet effet une queue filetée 305 apte à être engagée dans un taraudage correspondant prévu dans la plaque 31.

A titre indicatif, la hauteur (H) de la broche qui dépasse au-dessus de la plaque 31 est de l'ordre de 70 mm, le diamètre (d) de la partie cylindrique de la broche est de l'ordre de 8 mm, tandis que le plus grand diamètre (D) de la partie élargie 301 est de l'ordre de 17 mm.

Il est prévu à la partie centrale du dispositif, au-dessus du coulisseau 4, entre les postes 2 et (P) d'une part et 2′ et (P) d'autre part, deux axes parallèles 22, 22′, situés sensiblement dans le même plan horizontal, et convenablement fixés au bâti 1 par des moyens appropriés (non représentés).

Chacun de ces axes constitue l'axe d'articulation d'un boîtier en deux parties 2, 2′, formé d'une paire de plaques perforées 20, 21, respectivement 20′, 21′, lesquelles sont articulées à la fois individuellement — à la manière des deux valves d'une coquille — et en bloc sur cet axe.

La figure 5 montre en perspective la configuration de l'un de ces boîtiers 2.

Les ouvertures prévues dans chacune des plaques opposées 20, 21, sont disposées en vis-à-vis les unes des autres ; les ouvertures 200 prévues dans l'une des plaques (20) sont adaptées pour recevoir par emboîtement le fond, c'est-à-dire l'extrémité tronconique ou tronc-pyramidale des alvéoles d'un plateau alvéolé, tandis que les ouvertures 210 prévues dans l'autre plaque sont adaptées pour recevoir par emboîtement les extrémités libres, c'est-à-dire non logées dans les alvéoles, des oeufs garnissant le plateau alvéolé.

Ainsi, quand le boîtier est fermé, les oeufs sont parfaitement retenus entre les deux plaques, à l'intérieur des alvéoles, et l'ensemble peut être retourné sans dommage, par basculement de 180° autour de l'axe 22 ou 22′.

Quand l'un ou l'autre des boîtiers 2, 2′, se trouve en position à plat au poste central (P), la plaque 20 ou 20′ recevant le plateau alvéolé se trouve en bas et la plaque 21, 21′ en haut ; au contraire, lorsque le boîtier 2, ou 2′ se trouve au poste de cassage correspondant 3 ou 3′, la plaque 20 ou 20′ se trouve au-dessus de la plaque 21 ou 21′, et le plateau alvéolé se trouve par conséquent à l'envers, ouverture des alvéoles dirigées vers le bas ; dans cette position, chaque oeuf se trouve à l'aplomb d'une broche 30 ou 30′.

Des moyens de fermeture appropriés (non représentés) permettent de maintenir les boîtiers 2, 2′ fermés, c'est-à-dire les plaques 20, 21 et 20′, 21′ appliquées l'une contre l'autre de manière à former un ensemble monobloc.

Sous chacune des ouvertures 42, 42′ ménagées dans le coulisseau 4 est installée une plaque inclinée 60, 60′, permettant de recevoir et d'évacuer par gravité l'oeuf liquide issu de la casse. Ces deux plaques 60, 60′ convergent vers la partie centrale de la machine, c'est-à-dire au niveau du poste (P) (au-dessous de celui-ci), et débouchent dans un réceptacle commun 62, dont le fond 6, éventuellement amovible, a la forme d'une grille de tamisage ; il s'agit par exemple d'une grille en acier inoxydable comportant une pluralité de petits trous dont le diamètre est compris entre 3 et 6 mm, ou un treillis à mailles carrées de côté compris entre 2 et 4 mm.

Selon une caractéristique importante de l'invention, il est prévu sous le coulisseau 4 un piston presseur 5 apte à se déplacer verticalement à l'intérieur du réceptacle 62 ; à cet effet, les contours du piston 5 et de la paroi intérieure du réceptacle 62 sont naturellement identique, par exemple rectangulaires ; le piston 5 est par exemple porté par un socle 50, par l'intermédiaire de tiges 51, le socle étant lui-même fixé sous le coulisseau 4 par exemple au moyen de boulons.

La grille 6 surplombe une gouttière inclinée 7, qui débouche elle-même dans un bac récepteur 8 prévu à une extrémité de la machine.

Le boîtier 2′ étant vide, nous allons expliquer, en nous référant à la figure 1, de quelle manière on le remplit d'une série d'oeufs. On commence par amener le boîtier au poste (P), de telle sorte que la plaque 20′ se trouve en bas, disposée horizontalement ; dans cette position, elle est soutenue par une butée d'appui appropriée 26′ ; on ouvre ensuite le boîtier, après déverrouillage des moyens de fermeture, pour amener la plaque supérieure 21′ au poste de cassage ; le boîtier 2′ est par conséquent grand ouvert, en l'état représenté à la figure 1. L'opérateur, qui se trouve en face du poste (P), saisit alors un plateau alvéolé 9′ garni d'oeufs (0) et le place sur la plaque 20′, de manière à ce que les fonds d'alvéoles s'emboîtent dans les ouvertures 200′ ; cette mise en place est figurée par la flèche (h). Ensuite, l'opérateur rabat le couvercle 21′ pour l'amener au poste (P) (flèche f), de sorte que les ouvertures 210′ viennent chacune coiffer l'extrémité apparente des oeufs, en l'occurrence l'extrémité arrondie, les oeufs étant disposés pointes en bas dans les plateaux alvéolés ; l'opérateur actionne ensuite les moyens de verrouillage pour solidariser mutuellement les couvercles 20′ et 21′, puis il rabat l'ensemble de 180° pour amener le boîtier 2′, en le retournant au poste 3′ de cassage (flèche g).

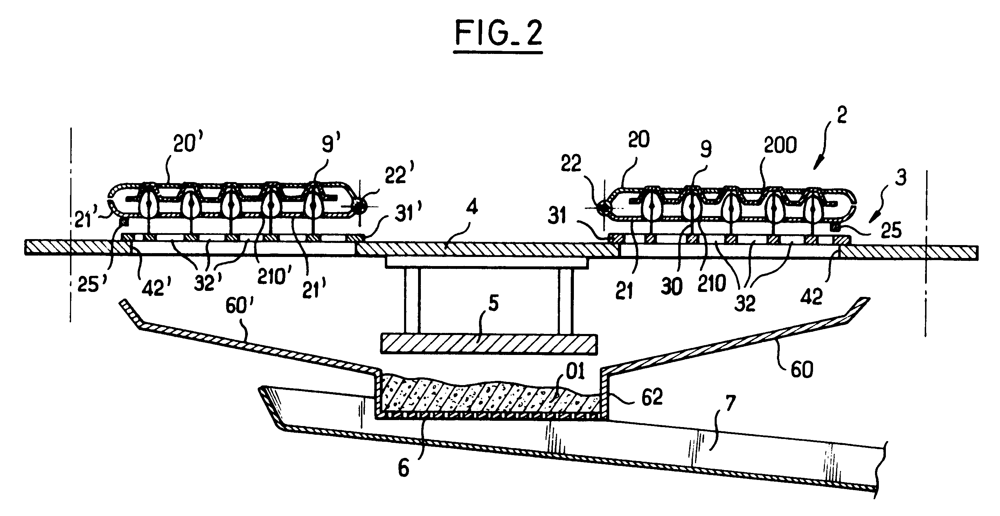

Le boîtier garni d'oeufs qui sont emprisonnés entre les deux plaques 20′ et 21′ se trouve alors dans la position représentée à la figure 2, en appui contre une butée 25′.

Conformément à l'invention, l'opération qui vient d'être décrite a été effectuée après que les oeufs présent dans l'autre boîtier 2 aient déjà été percés ; durant cette opération, leur contenu liquide peut donc s'écouler librement au travers des ouvertures 32 de la grille 31, sur la plaque réceptrice 60, puis dans le réceptacle 62.

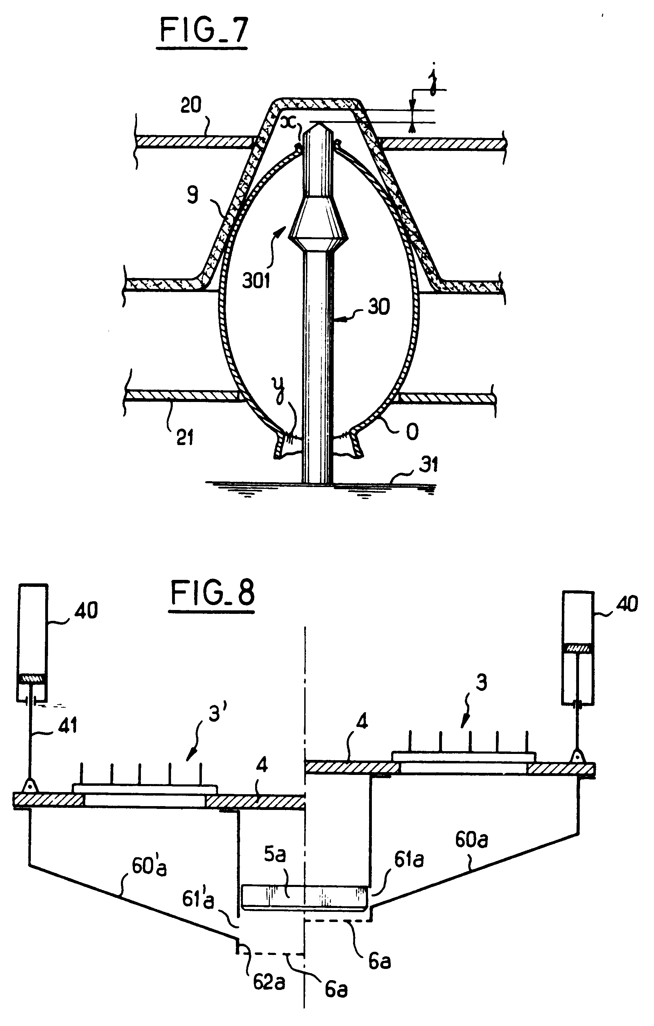

Le cassage des oeufs présent dans le boîtier 2′ se fait au moyen des vérins 40, dont la rétraction est commandée par l'opérateur, ce qui provoque le soulèvement du coulisseau 4. La figure 7 représente en détail et à échelle agrandie, de quelle manière une broche 30 perfore un oeuf (0) ; la course de montée du coulisseau est déterminée de telle manière que les deux extrémités de l'oeuf soient percées, l'extrémité biseautée de la broche arrivant en fin de course à une faible distance (j) du fond d'alvéole 9 ; grâce à la présence du renflement 301, l'orifice (y) percé à la partie inférieure (partie arrondie) de l'oeuf est sensiblement plus grande que l'ouverture (x) percée à la partie supérieure (pointe).

L'ouverture relativement grande (y) autorise donc un échappement rapide du contenu de l'oeuf qui descend par gravité, tandis que l'ouverture supérieure (x) permet la mise à pression atmosphérique de l'intérieur de l'oeuf, de manière à autoriser cet écoulement.

Durant l'opération de cassage des oeufs du boîtier 2, ceux du boîtier 2' sont percés une seconde fois par les broches 30', de manière à compléter le cassage.

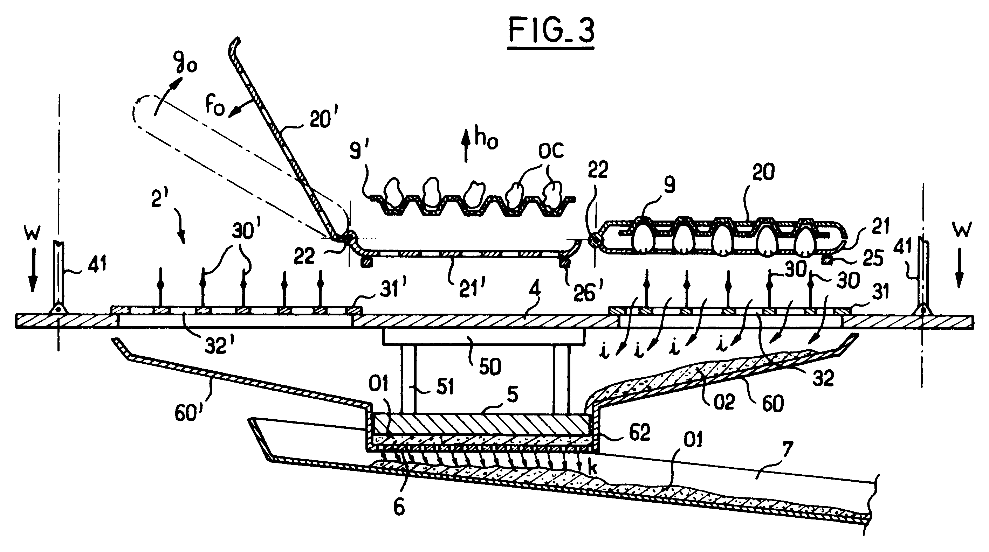

Le retrait de l'ensemble des broches 30, 30' hors du boîtier 2, 2' se fait par descente du coulisseau 4 (flèches W, figure 3). Durant cette descente, le piston 5 pénètre dans le réceptacle 62, et vient presser sur la masse d'oeufs liquides (01) précédemment produite. Ce piston exerce une action positive sur les oeufs liquides et les force à travers les ouvertures de la grille 6, ce qui accélère considérablement le tamisage (flèches k, figures 3).

Le changement de plateau alvéolé est réalisé par l'opérateur, pour les oeufs qui ont été cassés deux fois, par exemple les oeufs du boîtier 2'. A cet effet, le boîtier est d'abord rabattu au poste (P), (flèche $g_0$); le couvercle 20' est ensuite ouvert (flèche $f_0$) ; le plateau 9' garni d'oeufs cassés (OC) est retiré (flèche $h_0$), et est remplacé par un nouveau plateau garni d'oeufs à casser.

Durant toute cette phase, les oeufs fraîchement cassés du boîtier 2 continuent à se vider, (flèches i) et s'écoulent sur la plaque 60.

Cette masse (02) sera tamisée ultérieurement au cours de la prochaine descente du piston 5.

Après tamisage par la grille 6, l'ensemble de la substance obtenue s'écoule sur la gouttière 7 pour rejoindre le bac collecteur 8.

La grille 6 est avantageusement amovible, ce qui facilite son nettoyage.

Sur la variante représentée à la figure 8, les éléments similaires ont reçu des références identiques à celles de la figure 1, ces références portant l'indice (a) en cas d'inversion cinématique de ces éléments (parties fixe et mobile inversées).

Dans cette variante, le piston 5a est un piston fixe, solidaire du bâti, tandis que l'ensemble constitué par les plaques d'écoulement convergentes 60a et 60'a, le réceptacle 62a et la grille 6a sont fixés au-dessous du coulisseau 4.

Le fonctionnement de cette variante, en ce qui concerne le forçage des oeufs liquides à travers la grille de tamisage 6a est similaire à celui de la première forme de réalisation, à la différence que l'action de pressage se fait au moment de la montée du coulisseau et non au cours de sa descente. Des ouvertures appropriées 61a, 61'a permettent le passage des oeufs liquides de la plaque 60a, 60'a dans le réceptacle 62a. La partie gauche de la figure 8 représente le coulisseau en position basse, tandis que la partie droite de cette figure représente le coulisseau en position haute, position dans laquelle s'exerce le pressage du produit entre la grille 6a et le piston fixe 5a.

## Revendications

1. Dispositif pour casser les oeufs de manière industrielle, du type comprenant une paire de plaques perforées (20, 21) articulées à la fois individuellement — à la manière des deux valves d'une coquille — et en bloc, autour d'une axe horizontal fixe (22), ces deux plaques pouvant être refermées pour recevoir et retenir entre elles un plateau alvéolé rempli d'oeufs (9), et pouvant pivoter en bloc d'un angle de 180° pour transférer ce plateau (9), en le retournant, d'un poste de chargement et de déchargement (P) à un poste de cassage (3) et inversement, ce dernier étant équipé d'une série de broches (30) mobiles verticalement, aptes à transpercer les oeufs situés au poste de cassage en traversant les ouvertures (32) de l'une (21) des plaques, caractérisé en ce qu'il est prévu deux postes de cassage (3, 3') et qu'à chacun de ceux-ci est associée une paire de plaques (20, 21 ; 20', 21') qui peuvent être amenées par pivotement audit poste de chargement et de déchargement (P) lorsque l'autre paire de plaques se trouve au poste de cassage, et vice versa.

2. Dispositif selon la revendication 1, caractérisé en ce que les deux séries de broches (30, 30') équipant les deux postes de cassage (3, 3') sont portées par des plaques ajourées (31, 31') fixées à un coulisseau commun (4).

3. Dispositif selon la revendication 2, caractérisé en ce que l'entraînement du coulisseau (4) est réalisé par des vérins pneumatiques (40).

4. Dispositif selon l'une des revendications 2 ou 3, caractérisé en ce que les deux axes (22, 22') d'articulation des deux paires de plaques (20, 21 ; 20', 21') sont des axes parallèles, situés dans un plan horizontal commun, de part et d'autre du poste (P) de chargement et de déchargement.

5. Dispositif selon l'une des revendications 2 à 4, caractérisé en ce que chacun des postes de cassage (3, 3') surplombe une plaque (60, 60') d'écoulement des oeufs liquides cassés, lesdites plaques (60, 60') convergeant vers une grille de tamisage commune (6).

6. Dispositif selon la revendication 5, caractérisé en ce qu'il comporte un piston (5) adapté pour presser les oeufs liquides cassés à travers la grille (6).

7. Dispositif selon la revendication 6, caractérisé en ce que la grille (6) est fixe, tandis que le piston (5) est solidaire du coulisseau (4).

8. Dispositif selon la revendication 6, caractérisé en ce que le piston (5a) est fixe, tandis que la grille (6a) est solidaire du coulisseau (3).

## Patentansprüche

1. Vorrichtung zum Aufbrechen von Eiern auf industrielle Weise von der Art mit einem Paar von perforierten Platten (20, 21), die gleichzeitig individuell — auf die Art von zwei Schalen einer Muschel — und im Block um eine horizontale feste Achse (22) angelenkt sind, wobei die beiden Platten geschlossen werden können, um zwischen ihnen eine mit Eiern gefüllte Lochplatte (9) aufzunehmen und zu halten, und im Block um einen Winkel von 180° geschwenkt werden können, um diese Platte (9), indem sie sie zurückbewegen, einer Belade- und Entladestelle (P) zu einer Ausbrechstelle (3) und umgekehrt zu übertragen, wobei letztere mit einer Reihe von vertikal beweglichen Spindeln (30) versehen ist, die geeignet sind, die Eier, die sich an der Aufbrechstelle befinden, unter Durchqueren der Öffnungen (32) der einen (21) der Platten aufzustoßen, dadurch gekennzeichnet, daß zwei Aufbrechstellen (3, 3') vorgesehen sind und daß einer jeden von ihnen ein Plattenpaar (20, 21 ; 20',21') zugeordnet ist, die durch Schwenken der Belade- und Entladezone (P) zugeführt werden können, wenn das andere Plattenpaar sich an der Aufbrechstelle befindet und umgekehrt.

2. Vorrichtung nach Anspruch 1, dadurch gekennzeichnet, daß die beiden Spindelreihen (30, 30'), die die beiden Aufbrechstellen (3, 3') ausrüsten, von durchbrochenen Platten (31, 31') getragen werden, die an einem gemeinsamen Schlitten (4) befestigt sind.

3. Vorrichtung nach Anspruch 2, dadurch gekennzeichnet, daß der Antrieb des Schlittens (4) durch pneumatische Stelltriebe (40) erzeugt wird.

4. Vorrichtung nach einem der Ansprüche 2 oder 3, dadurch gekennzeichnet, daß die beiden Gelenkachsen (22, 22') der beiden Plattenpaare (20, 21 ; 20', 21') parallele Achsen sind, die in einer gemeinsamen horizontalen Ebene angeordnet sind beiderseits der Belade- und Entladestelle (P).

5. Vorrichtung nach einem der Ansprüche 2 bis 4, dadurch gekennzeichnet, daß eine jede der Aufbrechstellen (3, 3') über eine jede der Ablaufplatten der flüssigen aufgebrochenen Eier vorsteht, wobei die Platten (60, 60') auf ein gemeinsames Siebgitter (6) konvergieren.

6. Vorrichtung nach Anspruch 5, dadurch gekennzeichnet, daß sie einen Kolben (5) aufweist, der geeignet ist, die aufgebrochenen flüssigen Eier durch das Gitter (6) zu drücken.

7. Vorrichtung nach Anspruch 6, dadurch gekennzeichnet, daß das Gitter (6) fest ist, während der Kolben (5) mit dem Schlitten (4) verbunden ist.

8. Vorrichtung nach Anspruch 6, dadurch gekennzeichnet, daß der Kolben (5a) festliegt, während das Gitter (6a) mit dem Schlitten (4) verbunden ist.

## Claims

1. Apparatus for breaking eggs on an industrial scale, of the type comprising a pair of perforated plates (20, 21) articulated both individually — in the manner of the two shells of a mould and en bloc, about a stationary horizontal axis (22), these two plates being able to be closed in order to receive and hold between them an alveolar tray filled with eggs (9), and being able to pivot en bloc by an angle of 180° in order to transfer said tray (9), by turning it over, from a loading and unloading station (P) to a breaking station (3) and vice versa, the latter being equipped with a series of vertically movable pins (30) suitable for puncturing the eggs situated at the breaking station by passing through the openings (32) of one (21) of the plates, characterized in that two breaking stations (3, 3') are provided, and in that there is associated with each of them a pair of plates (20, 21 ; 20', 21') which may be pivoted back to said loading and unloading station (P) when the other pair of plates is located at the breaking station, and vice versa.

2. Apparatus according to Claim 1, characterized in that the two series of pins (30, 30') fitted on the two breaking stations (3, 3') are supported by punched plates (31, 31') fixed to a common slide (4).

3. Apparatus according to Claim 2, characterized in that the slide (4) is driven by pneumatic jacks (40).

4. Apparatus according to one of Claims 2 or 3, characterized in that the two axes (22, 22') of articulation of the two pairs of plates (20, 21 ; 20', 21') are parallel axes, located in a common horizontal plane, on either side of the loading and unloading station (3).

5. Apparatus according to one of Claims 2 to 4, characterized in that each of the breaking stations (3, 3') projects over a plate (60, 60') for the outflow of the broken liquid eggs, said plates (60, 60') converging towards a common sieving grid (6).

6. Apparatus according to Claim 5, characterized in that it has a piston (5) adapted to press the broken liquid eggs through the grid (6).

7. Apparatus according to Claim 6, characterized in that the grid (6) is stationary, whereas the piston (5) is integral with the slide (4).

8. Apparatus according to Claim 6, characterized in that the piston (5a) is stationary, whereas the grid (6a) is integral with the slide (3).

## FIG.1

# FIG_2

EP 0 316 248 B1

## FIG_3

EP 0 316 248 B1

## FIG_4

## FIG_4A

## FIG_5

## FIG_6

10

## FIG_7

## FIG_8